# EUROPEAN PATENT APPLICATION

(11) **EP 0 709 342 A1**
(43) Date of publication of application: **01.05.1996**
(21) Application number: 95115556.3
(22) Date of filing: 02.10.1995
(51) Int. Cl.: C03B 13/14

(54) **Apparatus for manufacturing mosaic tesserae made of glass paste**

(30) Priority: 06.10.1994 IT BO940437
(71) Applicant: SICIS INTERNATIONAL S.r.l., I-48100 Ravenne (IT)
(72) Inventor: Plazucci, Maurizio, I-47023 Cesena (Prov. of Forli) (IT)
(74) Representative: Modiano, Guido, Dr.-Ing.

(57) **Abstract**

Apparatus for manufacturing mosaic tesserae made of glass paste comprising a first pair of parallel lamination rollers (8,9) that lie on a horizontal plane and rotate in opposite directions to draw a semifluid mass of a glass paste that is fed through said rollers so as to form a layer that descends vertically to go between a second pair of parallel contrarotating forming rollers (26,27) that lie on a horizontal plane below said first pair of rollers, the rollers of said second pair being provided with recesses formed by ribs, the edge whereof lies within the cylindrical surface of said rollers, the recesses of one roller being mirror-symmetrically identical to those of the other roller, so that the ribs of the respective rollers are opposite in the tangency region, so as to produce grooves in the glass layer that passes between them and form tesserae the area whereof corresponds to that of said recesses.

## Description

The present invention relates to an apparatus for manufacturing mosaic tesserae made of glass paste.

Glass tesserae for making mosaics are currently obtained from sheets that are cut appropriately so as to obtain fragments that are as polygonal as possible.

This process has been found to be highly empirical, to the point that in addition to not allowing to obtain tesserae in a uniform format, it produces a considerable percentage of scraps which are practically unusable due to their size and shape. In particular, with the conventional process the tesserae often have a chamfered peripheral edge that allows to use them only on one side.

The aim of the present invention is therefore to provide an apparatus that allows to manufacture glass tesserae that are uniform both as to shape and thickness and in a much shorter time than conventional methods.

Within the scope of this aim, an important object of the present invention is to provide an apparatus that allows to manufacture two-sided tesserae, i.e., tesserae provided with identical opposite faces so that they can be used on both sides.

Another object of the present invention is an apparatus that is structurally simple and strong to withstand the considerable thermal and mechanical stress to which it is subjected during production.

According to the invention, this aim and these objects are achieved by means of an apparatus for manufacturing mosaic tesserae made of glass paste, which is characterized in that it comprises a first pair of parallel lamination rollers that lie on a horizontal plane and rotate in opposite directions to draw a semifluid mass of a glass paste that is fed through said rollers so as to form a layer that descends vertically to go between a second pair of parallel contrarotating forming rollers that lie on a horizontal plane below said first pair of rollers, the rollers of said second pair being provided with recesses formed by ribs, the edge whereof lies within the cylindrical surface of said rollers, the recesses of one roller being mirror-symmetrically identical to those of the other roller, so that the ribs of the respective rollers are opposite in the tangency region, so as to produce grooves in the glass layer that passes between them and form tesserae whose area corresponds to that of said recesses.

Further features of the present invention will become apparent from the following description of a preferred embodiment, illustrated only by way of non-limitative example in the accompanying drawings, wherein:

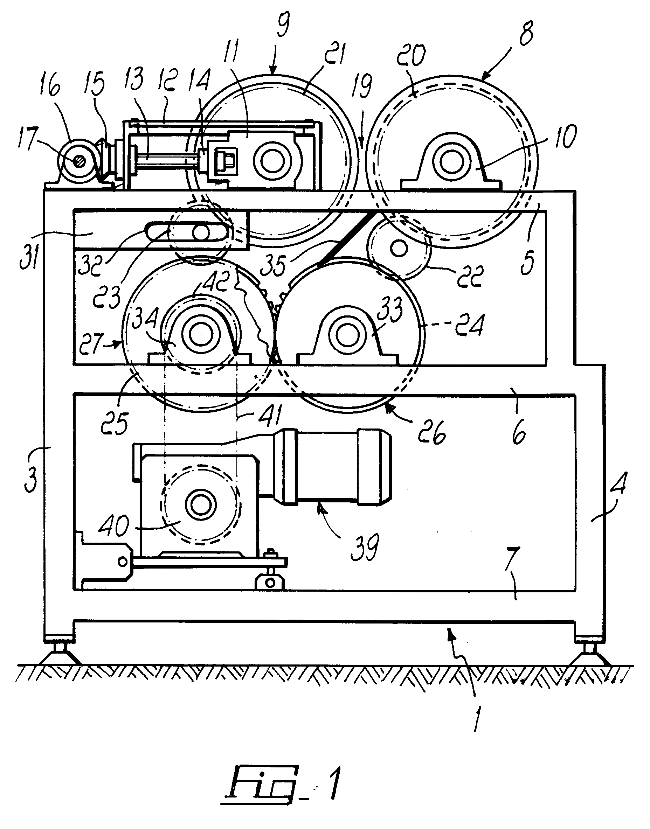

figure 1 is a lateral elevation view of the apparatus;

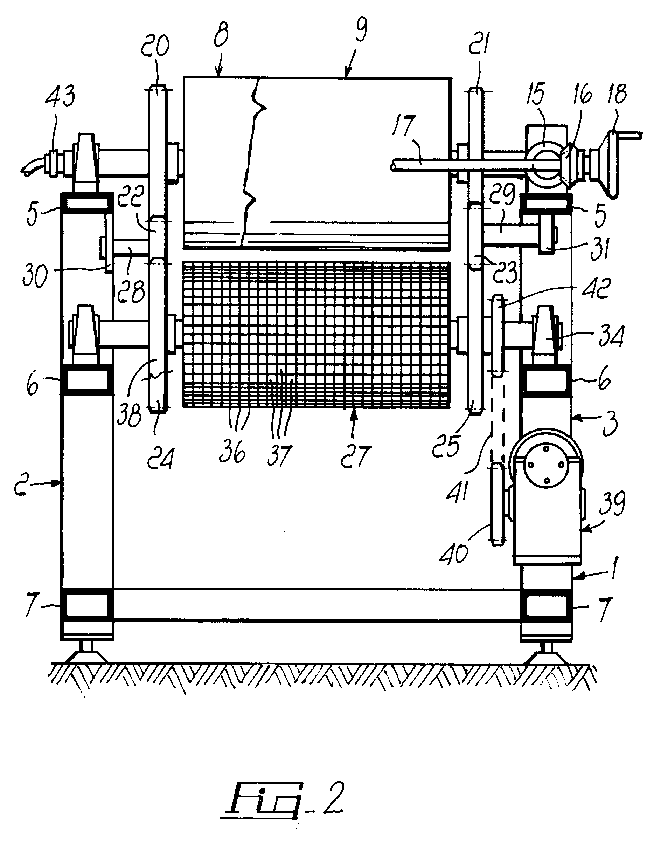

figure 2 is a front elevation view of the apparatus of figure 1.

With reference to the above figures, the apparatus comprises a frame that is composed of two shoulders 1 and 2, each of which is composed of two vertical corner posts 3 and 4 that are connected by a set of three horizontal cross-members and specifically by an upper cross-member 5, by an intermediate cross-member 6, and by a lower cross-member 7.

Two rollers 8 and 9 are supported on the upper cross-members 5 of the two shoulders 1 and 2; they have the same diameter and a smooth outer surface, and hereinafter they are termed lamination rollers, owing to their function of forming a layer from a glass paste that is driven between them. The supports of the roller 8 are designated by the reference numeral 10 and are fixed on the cross-members 5. The supports of the roller 9 are instead constituted by respective sliders 11 slideable on guiding frames 12 that are mounted on the cross-members 5 to move the roller 9 closer or further away from the roller 8. The movement of the roller 9 is achieved by means of threaded rods 13 that are engaged in respective nut screws 14 of the sliders 11 and are fixedly coupled axially, but so that they can rotate freely, in the frames 12. Bevel gears 15 are keyed on the ends of the rods 12 that lie opposite to the ones that engage in the nut screws; said bevel gears mesh with respective bevel gears 16 keyed on a shaft 17 that lies in a bridge-like fashion between the shoulders 1 and 2 on which it is rotatably mounted. A handwheel 18 is rotationally rigidly coupled to the shaft 17, and its actuation causes the rotation of the threaded rods 13 and therefore the simultaneous movement of the sliders 11 and, ultimately, of the roller 9 with respect to the roller 8 so as to form, between the rollers 8 and 9, a gap 19 the size whereof is adjustable according to the thickness to be given to the glass layer.

Respective gears 20 and 21 are coaxially rigidly coupled to the lamination rollers 8 and 9. The gear 20 is located between the shoulder 2 and the adjacent end of the roller 8, whereas the gear 21 lies between the shoulder 1 and the adjacent end of the roller 9.

The gears 20 and 21 are kinematically connected, by means of respective intermediate gears 22 and 23, to an equal number of gears 24 and 25 that are rotationally rigidly coupled to two rollers 26 and 27 that have identical diameters and are located below the lamination rollers 8 and 9. The rollers 26 and 27 are termed hereinafter forming rollers, owing to their ability to form glass tesserae from the layer laminated by the rollers 8 and 9.

The intermediate gears 22 and 23 are rotatable about respective stems 28 and 29 that cantilever out of plate-shaped elements 30 and 31 that are welded below the cross-members 5 of the shoulders 1 and 2. A horizontally elongated slot 32 is formed in the plate-shaped element 31 and is engaged by the stem 28 so as to ensure meshing with the gear 21 when the roller 9 is moved with respect to the roller 8.

The forming rollers 26 and 27 are rotatable in supports 33 and 34 that are fixed to the intermediate cross-member 6 and have a point of tangency that is shifted laterally with respect to the gap 19 of the upper lamination rollers 8 and 9. A chute 35 lies between the exit region of the gap 19 and the tangency region of the forming rollers 26 and 27; by means of its opposite ends, it is fixed to tabs of the shoulders 1 and 2. The chute 35 has the purpose of guiding between the forming rollers 26 and 27 the layer of glass paste that descends from the gap 19.

In order to mold the glass layer into square tesserae, ribs 36 are formed on the peripheral region of the rollers 26 and 27; said ribs intersect at right angles so as to form chequered square recesses 37.

For gripping the glass layer that is conveyed between them and form tesserae whose shape is complementary to that of the recesses, the rollers 26 and 27 rotate in opposite directions by means of a mutual meshing produced by providing, on the roller 27, on the side that lies opposite to the one where the gear 25 is keyed, an additional gear 38 that constantly meshes with the gear 24 of the roller 26.

The forming and lamination rollers are actuated by means of a gearmotor 39 that is mounted on the lower cross-member 7 and is provided, on its output shaft, with a pinion 40 on which a chain 41 is wrapped and closed in a loop around a pinion 42 that is keyed to the shaft of the roller 27 adjacent to the gear 25.

The operation of the described and illustrated apparatus, despite being already evident from the foregoing, is as follows.

The glass paste, having an adequate fluid consistency, is conveyed between the upper lamination rollers 8 and 9, which convert it into a layer having the desired thickness, which is determined by the width of the gap 19. The layer is then conveyed by the chute 35 between the rollers 26 and 27, where the ribs 36 produce perpendicular grooves in it, thus forming tesserae whose shape is complementary to that of the recesses 37.

In practice, by keeping the ribs of the forming rollers 26 and 27 spaced from each other, so that the edges of said ribs skim each other, at the exit of the forming rollers 26 and 27 a glass layer is obtained that is composed of tesserae that are joined at very thin bridges formed by the opposite arrangement of the ribs of the forming rollers. The tesserae are separated by subjecting the glassy layer to a slight flexing motion that separates the tesserae without damaging them.

Numerous modifications and variations are possible in the practical embodiment of the invention. For example, the ribs can have, on the forming rollers, an arrangement that is different from the one that has been described and illustrated, so as to form tesserae having any polygonal shape or a circular shape.

Advantageously, the rollers are internally hollow to allow to feed a liquid that has a controlled temperature, so as to optimize the formation of the glass layer and the molding of the tesserae. The liquid can be fed by means of rotary couplings 43 that are connected coaxially to the shafts of the lamination and forming rollers.

It is evident that the described apparatus perfectly achieves the intended aim and objects. A substantial advantage that can be achieved consists in that the tesserae thus produced are extremely uniform in shape and thickness. In particular, the tesserae are strictly two-sided, i.e., their opposite faces are mirror-symmetrically identical, and therefore can be used on either side. In practice, this feature leads to significant advantages in the laying of the individual tesserae or in the preparation of mosaic panels composed of tesserae applied to a support.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. Apparatus for manufacturing mosaic tesserae made of glass paste, which is characterized in that it comprises a first pair of parallel lamination rollers (8, 9) that lie on a horizontal plane and rotate in opposite directions to draw a semifluid mass of a glass paste that is fed through said rollers so as to form a vertically descendable glass layer, a second pair of parallel counterrotating forming rollers (26, 27) that lie on a horizontal plane below said first pair of lamination rollers, the forming rollers of said second pair being provided with recesses (37) formed by ribs (36), the edge of which lies within the cylindrical surface of said forming rollers, the recesses of one roller being mirror-symmetrically identical to those of the other roller, so that the ribs of the respective rollers are opposite in the tangency region, so as to produce grooves in the vertically descendable glass layer that passes between them and form tesserae the area whereof corresponds to that of said recesses.

2. Apparatus according to claim 1, characterized in that one of said two lamination rollers (8, 9) comprises means (11-18) for adjusting its distance with respect to the other roller.

3. Apparatus according to claim 2, characterized in that said adjustment means comprise two sliders (11) for supporting said lamination rollers (8, 9) which are provided with nut screws (14) for the engagement of threaded rods (13) that lie at right angles to the axis of said roller and are coupled, through pairs of bevel gears (15, 16), to an actuation shaft (17) that can be actuated through a handwheel (18).

4. Apparatus according to one or more of the preceding claims, characterized in that respective bevel gears (20, 21; 24, 25) are rotationally rigidly coupled to the lamination rollers (8, 9) and to the forming rollers (26, 27); and in that said forming rollers (26, 27) are connected, to the respective lamination rollers (8, 9) by freely rotating intermediate gears (22, 23).

5. Apparatus according to claim 4, characterized in that the gears (24, 25) of said forming rollers (26, 27) mesh together and in that one (27) of said forming rollers is connected to a drive unit (39).

6. Apparatus according to one of the preceding claims, characterized in that it comprises a chute (35), which runs from the exit of said two lamination rollers (8, 9) towards the tangency region of said forming rollers (26, 27) to convey the laminated layer between said forming rollers.

7. Apparatus according to one of the preceding claims, characterized in that the forming rollers (26, 27) have such a mutual distance that the edges of the ribs (36) skim each other so as to produce, at the exit of the forming rollers, a glass layer in which the tesserae remain joined at very thin bridges formed by the mutually opposite arrangement of the ribs of the forming rollers.

8. Apparatus according to one of the preceding claims, characterized in that said forming rollers (26, 27) comprise ribs (36) that are mutually perpendicular, so as to form quadrangular recesses (37).
